# EUROPEAN PATENT APPLICATION

(11) **EP 2 604 519 A1**
(43) Date of publication of application: **19.06.2013**
(21) Application number: 11870167.1
(22) Date of filing: 01.12.2011
(51) Int. Cl.: B64C 27/26

(54) **COMPOSITE AIRCRAFT CONSISTING OF FIXED-WING AND ELECTRICALLY DRIVEN PROPELLERS**

(30) Priority: 17.10.2011 CN 201120397886 U; 17.10.2011 CN 201110316929
(71) Applicant: Tian, Yu, Shanghai 201615 (CN); Jiang, Wenyan, Jiuting Songjiang District Shanghai 201615 (CN)
(72) Inventor: Tian, Yu, Shanghai 201615 (CN); Jiang, Wenyan, Jiuting Songjiang District Shanghai 201615 (CN)
(74) Representative: Hannke, Christian
(86) International application number: PCT/CN2011/083305
(87) International publication number: WO 2013/056493

(57) **Abstract**

The present invention discloses a fixed-wing and electric multi-rotor composite aircraft, comprising an electric multi-rotor dynamic system and a main controller, the fixed-wing dynamic system and electric multi-rotor dynamic system are mutually independent structurally, the main controller comprises the fixed-wing control system and an electric multi-rotor control system which is used for controlling the operation of the electric multi-rotor dynamic system, the main controller is also used for controlling the fixed-wing control system and the electric multi-rotor control system to operate independently or synergistically, the rotor rotating plane of the electric multi-rotor dynamic system is parallel to the airframe central shaft. The aircraft is able to shift between two flying modes freely, and takes off, lands and flies like a helicopter as well as a fixed-wing aircraft. A fixed-wing aircraft-helicopter mixed mode can also be used in the take-off, landing and flying process.

## Description

### Field of invention

The present invention relates to an aircraft, and more particularly relates to a fixed-wing and electric multi-rotor composite aircraft.

### Description of related arts

For the common fixed-wing aircraft in the field of aviation, since it mainly uses the lift generated by the wing to balance the weight of the aircraft and the dynamic system is mainly used to overcome the drag of the aircraft, the fixed-wing aircraft can take off under the power (thrust) much smaller than the weight of the aircraft. The fixed-wing aircraft has high flying speed, long flying range and long cruise time; but it needs long distance to take off and land, and requires high quality runway; thus the application of the fixed-wing aircraft in remote rural area without dedicated airport is severely affected and obstructed.

For the common rotor helicopter in the field of aviation, the problem to take off and land in a narrow space can be solved. Among known rotorcrafts, apart from common single rotor helicopter, there is also multi-rotor helicopter, which usually changes the rotating speed of the rotor to modify the flying attitude. Take the four-rotor helicopter as an example, four rotors are placed symmetrically relative to a center, among which two rotors rotate clockwise and another two rotate counterclockwise. When the aircraft needs to turn to one side, it only needs to increase the rotating speed of two clockwise/counterclockwise rotors and to decrease the rotating speed of another two clockwise/counterclockwise rotors so as to change the flight direction. When the aircraft needs to incline, it only needs to decrease the speed of the rotors along the flight direction and to increase the speed of the rotors on the symmetrical place so as to fly in the specified direction due to the difference of lift.

Since the rotor connected directly with the dynamic system has much lower efficiency than the wing of the fixed-wing aircraft, it consumes more power. And the drag of the helicopter is much larger than that of the fixed-wing aircraft because the forward speed of the helicopter is mainly provided by the component force generated by the rotor plate inclining the inclining plate. Thus, the flying speed, the flying distance and the cruise time of the helicopter are not as good as those of the fixed-wing aircraft. Therefore, the persons skilled in the field of aviation have been always looking for such aircraft that possesses the advantages of both the fixed-wing aircraft and the helicopter.

The lift engine itself has simple design, and yet it does not work when the aircraft cruises and it occupies space inside the aircraft, so the weight of the lift engine is dead weight. It is an urgent problem for the vertical take-off and landing aircraft to decrease or eliminate the dead weight. To unite the lift engine and the cruise engine can eliminate the dead weight of the dedicated lift engine for sure. The most immediate way to unite the cruise engine and the lift engine is to tilt the jet engine so that the engine blows to the ground and certainly generates the direct lift. The principle is simple, but why it is not the first choice for the vertical take-off and landing aircraft? Firstly, the location of the engine in the aircraft is too limited if the engine is tilted, the location of the wing and the engine must accord to the center of gravity of the aircraft, and basically it can only be under the wing or at the wing tip. Thus, if parts of the lift engines break down or generate insufficient energy instantly, the asymmetric lift can cause disastrous accident easily. The tilting rotors use the synchronizing shaft to solve this problem, but the tilting jet engine nearly cannot be compensated by the engine on one side when the engine on the other side fails. Secondly, the engine itself is very heavy, the tilting mechanism is difficult to realize. Thirdly, the engine has a high requirement for the inlet, otherwise the engine efficiency plummets. But when the engine is tilted, the condition of the inlet is hard to maintain. Moreover, the vertical take-off and landing requires generating a large amount of thrust in a short time; the cruise requires long working hours but not so much thrust; it's hard to coordinate these two conditions in the design. The lift is generated by the engines directly, no way to manipulate. To the extreme, to taxi and take off on the runway and to generate lift by the wing only need a little thrust. But it needs at least 1:1 thrust-weight ratio to take off and land vertically by using jet power, and the power requirements are much higher.

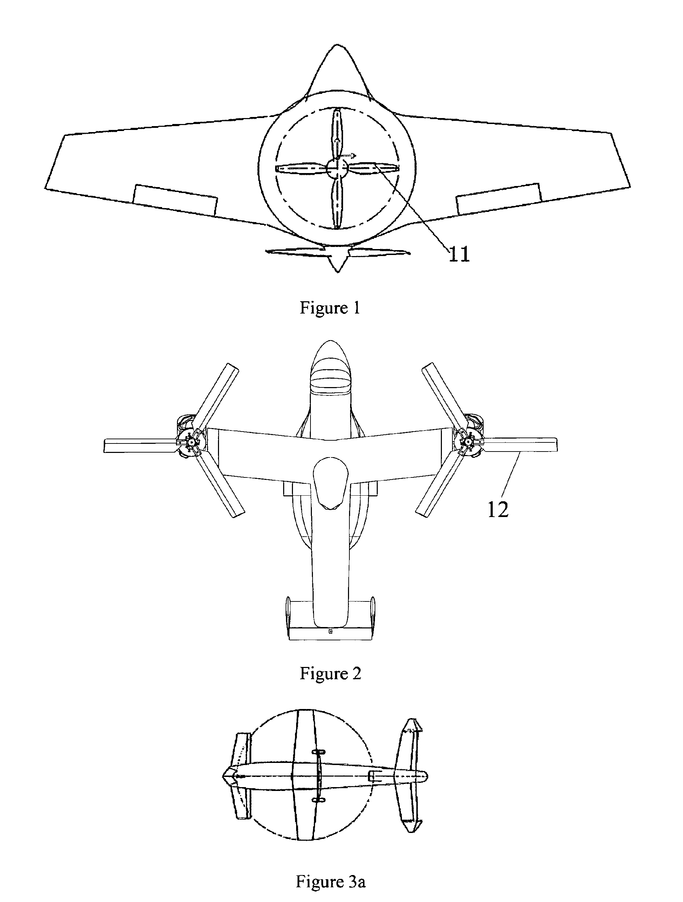

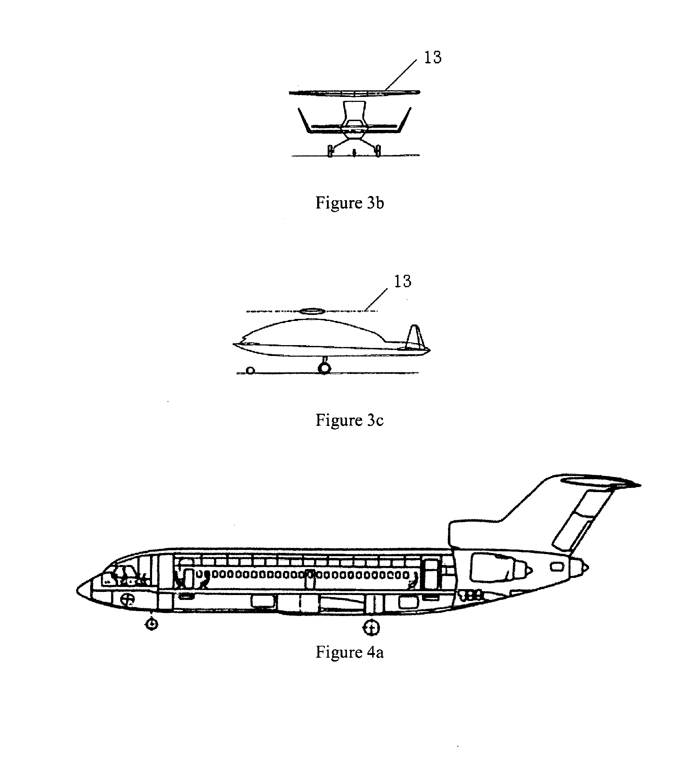

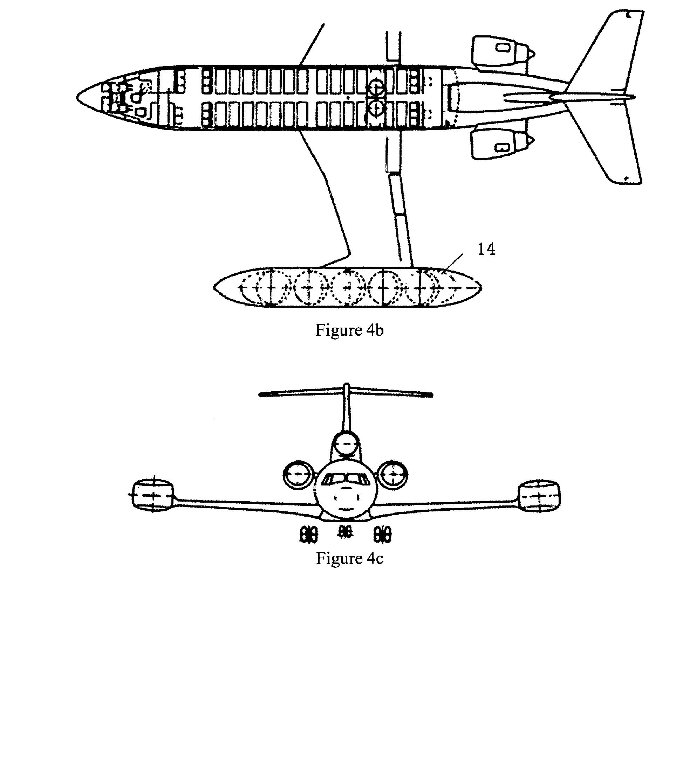

Aircrafts which can take off and land vertically and meanwhile have the fixed-wing function are known and roughly categorized as below:
1. As shown in fig. 1, it is a scheme which combines the ducted fan and the forward blade 11. For instance, the UAV Mariner of Sikorsky Aircraft Corporation, XV-5 of the General Electric Company, etc.. The disadvantage of this type of aircraft is that the duct adds some weight, increases more air drag and obstructs the arrangement of the load and equipments in the aircraft, or decreases the effective lift area of the wing.
2. The fixed-wing aircraft which achieves vertical take-off and landing by tilting power. V22 as shown in fig. 2 is an example, the propeller of which is denoted by12. The power unit of this type of aircraft generates a vertical thrust to lift the aircraft vertically off the ground when it takes off. Later in the air, the thrust of the power unit is gradually turned to the flying direction, which enables the aircraft to fly forward like an ordinary fixed-wing aircraft. But its tilting mechanism is complicated, expensive and unreliable, especially that the stability and maneuverability of the dynamic system when it tilts (i.e. the aircraft does not have forward speed) is a difficult problem which has always troubled the skilled persons.
3. Rotor-wing aircraft. 'Dragonfly' aircraft of Boeing as shown in fig. 3a-3c is an example. The wing 13 of this type of aircraft can be changed to rotor so as to achieve vertical take-off and landing. This type of aircraft has such problems as complicated structure, expensive cost of manufacture and low reliability just as the tilting power aircraft does.
4. As shown in fig. 4a-4c, aircrafts with lift engines 14 installed at the bottom. This type of aircraft intends to solve the problem of the fixed-wing aircraft's vertical take-off and landing; the lift engines are only for providing the lift when taking off and landing vertically or for partly controlling the direction. Such aircraft does not have entire helicopter flying mode. Dornier 228 aircraft is an example.
5. The Yak-38 of the USSR has only two lift engines and one lift-cruise engine; the lift engines inside the airframe reduce the threat of one engine's failure to the safety. But it also has problem to install the lift engine inside the airframe. Firstly, hot exhaust air is close to the air inlet of the engine, which can cause the suck-back problem of the exhaust air. Secondly, high-speed exhaust air flows towards both sides along the ground under the airframe, but the air above the airframe (except the area near the air inlet of the lift engine) is relatively static, which causes the suck down effect of the airframe towards the ground. Thirdly, since the aircraft needs to take off and land vertically on the deck, its hot air exhausted downward causes severe ablation of the deck. Thus this type of aircraft is unpractical.

Therefore, the aviation industry is eager to look for a simple structured, reliable aircraft which possesses both the performance of the fixed-wing aircraft and the rotor helicopter and also can shift between these two flying modes freely at any time.

### Content of the present invention

The technical problem to be solved in the present invention is for overcoming the above-mentioned defects in the prior technology and providing a simple structured, reliable aircraft which possesses both the performance of the fixed-wing aircraft and the rotor helicopter and also can shift between these two flying modes freely at any time.

The present invention solves the above-mentioned technical problems through the following technical solutions:
A fixed-wing and electric multi-rotor composite aircraft comprises a set of fixed-wing aircraft parts, which comprises airframe, wing, fixed-wing dynamic system, and fixed-wing control system, the fixed-wing control system comprises fixed-wing dynamic control system and fixed-wing control surface control system, which is characterized in that this aircraft also comprises a set of electric multi-rotor dynamic systems and a main controller. The fixed-wing dynamic system and electric multi-rotor dynamic system are mutually independent structurally. The main controller comprises the fixed-wing control system and an electric multi-rotor control system which is used for controlling the operation of the electric multi-rotor dynamic system. The main controller is also used for controlling the fixed-wing control system and the electric multi-rotor control system to operate independently or synergistically. The rotor rotating plane of the electric multi-rotor dynamic system is parallel to the airframe central shaft.

In a further preferred embodiment, the electric multi-rotor control system is used for controlling the take-off and landing, the attitude and the flying direction of the aircraft.

In a further preferred embodiment, the electric multi-rotor control system controls the take-off and landing of the aircraft by means of increasing and decreasing the rotating speed and/or the pitch of all the rotors.

In a further preferred embodiment, the electric multi-rotor control system controls the attitude of the aircraft by means of decreasing the rotating speed and /or the pitch of the rotors which are in front of the center of gravity of the aircraft in the direction of flying and at the same time also increasing the rotating speed and /or the pitch of the rotors which are behind the center of gravity of the aircraft in the direction of flying.

In a further preferred embodiment, the electric multi-rotor control system controls the flying direction of the aircraft by means of increasing the rotating speed and /or the pitch of the rotors which rotates in the reverse direction of the turning direction of the aircraft and decreasing the rotating speed and /or the pitch of the rotors which rotates in the same direction as the turning direction of the aircraft.

In a further preferred embodiment, the electric multi-rotor dynamic systems have at least four sets, each of which comprises the power unit and the rotors connected to the power unit. The rotors are respectively arranged on both sides of the airframe and in front of and behind the wing. And they are placed symmetrically relative to the center of gravity of the aircraft. Or the electric multi-rotor dynamic systems as a whole are respectively arranged on both sides of the airframe and in front of and behind the wing. And they are placed symmetrically relative to the center of gravity of the aircraft.

In a further preferred embodiment, each set of the electric multi-rotor dynamic system or the rotor connects to the airframe or the wing through a supporting arm.

In a further preferred embodiment, some of the sets of the electric multi-rotor dynamic systems or some sets of rotors share a supporting arm to connect to the airframe or the wing.

In a further preferred embodiment, the power unit is a motor.

In a further preferred embodiment, the electric multi-rotor dynamic system comprises a rotor blade location control unit, which is used for controlling the rotor blade location of the electric multi-rotor dynamic system to be always parallel to the flying direction of the aircraft when the electric multi-rotor dynamic system is switched off and the fixed-wing dynamic system is switched on. Thus, the flying drag can be decreased to the greatest extent possible and the flying efficiency is higher.

In a further preferred embodiment, one of the synergistic working modes is that: in the process of shifting from the multi-rotor helicopter flying mode to the fixed-wing flying mode, the propellers start to generate power when the aircraft is hovering and the aircraft starts to have horizontal movement; then as the airspeed increases, the fixed-wing generates lift gradually; at the same time the multi-rotor decreases the rotating speed gradually in order to decrease the rotor lift so that the overall lift is maintained unchanged until the airspeed is larger than the stalling speed of the fixed-wing; thus the shift from the multi-rotor helicopter flying mode to the fixed-wing flying mode is completed.

In a further preferred embodiment, another of the synergistic working modes is that: in the process of shifting from the fixed-wing flying mode to the multi-rotor helicopter flying mode, as the thrust of the horizontal propellers decreases and the airspeed gets close to the stalling speed of the fixed-wing, the multi-rotor starts to generate lift; as the airspeed decreases more, the multi-rotor increases the rotating speed in order to increase the lift to compensate the decrease of the lift of the fixed-wing part so that the overall lift is maintained unchanged; when the propellers stops rotating at last and the airspeed decreases to zero, the fixed-wing flying mode is fully shifted to the multi-rotor helicopter flying mode.

In a further preferred embodiment, another of the synergistic working modes is that: in the process of taking off, flying and landing, the fixed-wing control system and the electric multi-rotor control system operate synergistically under the control of the main controller.

In a further preferred embodiment, the propeller of the fixed-wing dynamic system is located in the front of the airframe or in the back of the airframe, or the propellers are located on both sides of the airframe or in the front and the back of the airframe simultaneously.

In a further preferred embodiment, the tail structure of the aircraft is flying wing-like without a tail, such as 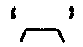 share, 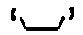 shape, 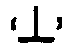 shape, 'T' shape, 'V' shape, or '∧' shape.

In a further preferred embodiment, the fixed-wing dynamic system is electric dynamic system or fuel oil dynamic system.

In a further preferred embodiment, the number of the fixed-wing dynamic systems is one set or several sets.

The positive progress of the present invention lies in:
The composite aircraft of the present invention not only possesses the performance of both the fixed-wing aircraft and the rotor helicopter, but can shift between these two flying modes freely as well, such that it can take off and land vertically and fly like a helicopter or it can take off and land like a fixed-wing aircraft or it can use the mode of two dynamic systems working together, because it possesses the fixed-wing dynamic system and the electric multi-rotor dynamic system and the two dynamic systems can be controlled independently mutually.

In the present invention, since the two dynamic systems which can be controlled independently mutually are used, compared to including both the fixed-wing aircraft and the rotor helicopter in one set of dynamic system, the present invention has simpler structure without affecting the arrangement of the load and the equipments in the aircraft, and no complicated tilting structure is needed. Using the independent electric multi-rotor dynamic system helps reducing the risk of the development of the dynamic system; and through proper arrangement, the lift engine can ensure the aircraft return safely when the main engine breaks down or it is damaged in the war, thus achieving the backup of the power.

Since electric power is used in the present invention, it adds only a little weight so that the added dead weight when the fixed-wing flying mode is used (the weight of the rotor helicopter part) is little. Meanwhile, since the electric power is used, the noise of the whole aircraft is low and the air flow blown downward from the rotor helicopter does not have high temperature, thus the aircraft of the present invention is more environment-friendly compared to other aircrafts using the traditional engine. Besides, using the motor as the power unit can keep the weight of the electric multi-rotor dynamic system below 20% of weight of the whole aircraft, much lighter than using the traditional dynamic system, so that the aircraft is controlled more easily and energy saving.

Finally, the present invention has wide applications, including civil aviation field and military field. It can be applied not only to the model aircraft but also to the UAV and the manned aircraft.

### Brief description of the drawings:

Fig.1 is the structure diagram of the existing aircraft combing the ducted fan and the forward blade.
Fig. 2 is the structure diagram of the existing aircraft achieving vertical take-off and landing by tilting power.
Fig. 3a-3c are the structure diagrams of the existing rotor-wing aircraft.
Fig. 4a-4c are the structure diagrams of the existing aircraft with lift engines installed at the bottom.
Fig. 5 is the structure diagram of the aircraft in the first embodiment of the present invention.
Fig. 6 is the structure diagram of the dynamic control system of the aircraft of the present invention.
Fig. 7-13 are the structure diagrams of the aircraft with different tail types in the present invention.
Fig. 14 and 15 are the structure diagrams of the aircraft in the second embodiment of the present invention.
Fig. 16 is the diagram of the control of the take-off and landing, attitude and flying direction of the aircraft of the present invention.

### Detailed description of the preferred embodiment

Below presents preferred embodiments of the present invention based on the drawings in order to illustrate the technical schemes of the present invention in detail.

### The first embodiment

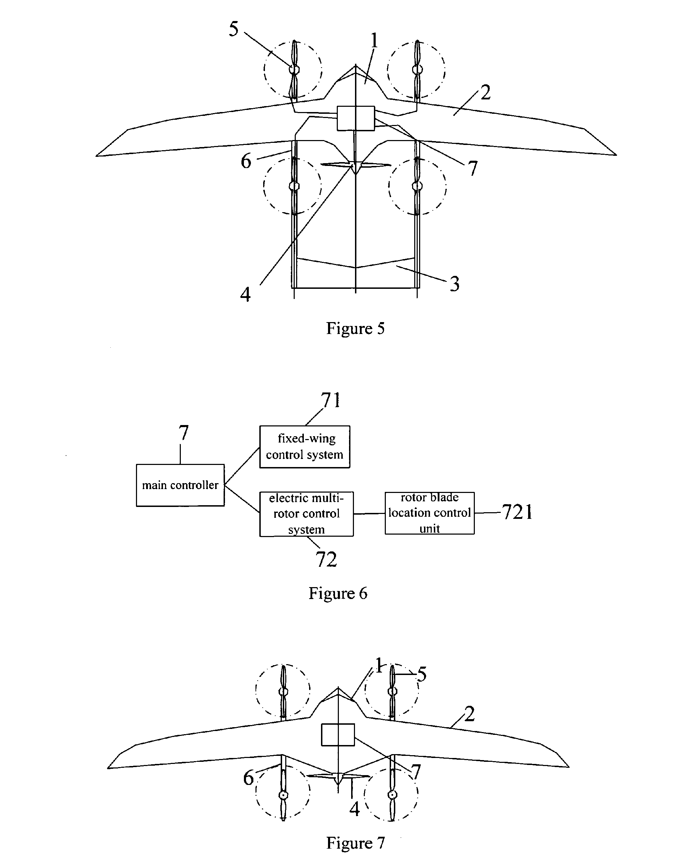

A fixed-wing and electric multi-rotor composite aircraft of the present invention as shown in fig. 5 comprises a set of fixed-wing aircraft parts, which comprises airframe 1, main wing 2, tail 3 and fixed-wing dynamic system 4 (also named fixed-wing aircraft dynamic system), namely, the fixed-wing dynamic system 4 provides power to the fixed-wing aircraft parts. The persons skilled in the art shall understand that the main wing and the fixed-wing in the text refer to the same part; it is named the fixed-wing relative to the rotor; it is named the main wing relative to the tail according to the aircraft structure. On the basis of the fixed-wing aircraft parts, therein four sets of electric multi-rotor dynamic system 5 are added, which provides power to the rotor helicopter parts. But it is not limited to four sets. The electric multi-rotor dynamic system 5 can be realized by using the specific composition and structure of the existing helicopter, so no further detail will be described here. The rotor rotating plane of the electric multi-rotor dynamic system is parallel to the horizontal plane, wherein the parallelism can be approximate parallelism, for instance the angle of pitch between the airframe and the horizontal plane is in the range of 10°. The persons skilled in the art shall understand that the parallelism, perpendicularity and horizontality can also be approximate parallelism, perpendicularity and horizontality; it does not only refer to absolute parallelism, perpendicularity and horizontality geometrically. The electric multi-rotor dynamic system 5 comprises power unit and rotors; the rotors can be respectively arranged on both sides of the airframe and in front of and behind the main wing, symmetrically placed relative to the airframe; the power unit is arranged in the airframe. Or the whole sets of the electric multi-rotor dynamic system 5 are respectively arranged on both sides of the airframe and in front of and behind the main wing, symmetrically placed relative to the airframe. This arrangement ensures that the whole center of gravity of the aircraft lies at the center line of the airframe, which keeps balance of the aircraft in the process of the its take-off, landing and flying, without affecting its operational status. Of course, other location arrangements can be applied provided that the above-mentioned effect can be achieved. In this embodiment, each set of the electric multi-rotor dynamic system 5 in a whole or the rotor itself connects to the main wing 2through a supporting arm 6. Of course, in other embodiments, some of the sets of the electric multi-rotor dynamic systems or rotors share a supporting arm to connect to the airframe and the wing.

The electric multi-rotor dynamic systems in this embodiment uses electric dynamic system, including the motor and the rotor connected to the motor; a gear box can be added based on the real situation. Since the electric power is used, it adds only a little weight so that the added dead weight when the fixed-wing flying mode is used (the weight of the rotor helicopter part) is little. Meanwhile, since the electric power is used, the noise of the whole aircraft is low and the air flow blown downward from the rotor helicopter does not have high temperature, thus the aircraft of present invention is more environment-friendly compared to other aircrafts using the traditional engine. The power of the fixed-wing dynamic system can be electric power or other power. The number of the fixed-wing dynamic systems can be one set or several sets. The propeller of the fixed-wing dynamic system is located in the front of the airframe or in the back of the airframe, or the propellers are located on both sides of the airframe or in the front and the back of the airframe simultaneously.

To ensure the aircraft of the invention to shift freely between two modes, structurally, the fixed-wing dynamic system and electric multi-rotor dynamic system are arranged mutually independently and a main controller 7 is equipped to achieve the control of the shift between two modes. The main controller 7 comprises a fixed-wing control system 71, which comprises the fixed-wing dynamic control system for controlling the fixed-wing dynamic system and the fixed-wing control surface control system. Since the fixed-wing control system can be realized by using the structure and composition of the existing fixed-wing aircraft, so no further detail will be described here.

The main controller 7 also includes an electric multi-rotor control system 72 which is used for controlling the operation of the electric multi-rotor dynamic system 5. The main controller 7 is also used for controlling the fixed-wing control system 71 and the electric multi-rotor control system 72 to operate independently or synergistically. Here, the situation under which only the fixed-wing control system 71 is working corresponds to the fixed-wing aircraft mode; the situation under which only the electric multi-rotor control system 72 is working corresponds to the helicopter mode, for controlling the take-off, landing, attitude and flying direction of the aircraft; the situation under which two systems work synergistically is called the fixed-wing aircraft-helicopter mixed mode.

In order to make it easy for the persons skilled in the art to understand, the specific operation principle is described in detail below regarding the take-off, landing and flying process of the whole aircraft. To clarify, the flying process refers to the horizontal flying process after the aircraft takes off and before landing.

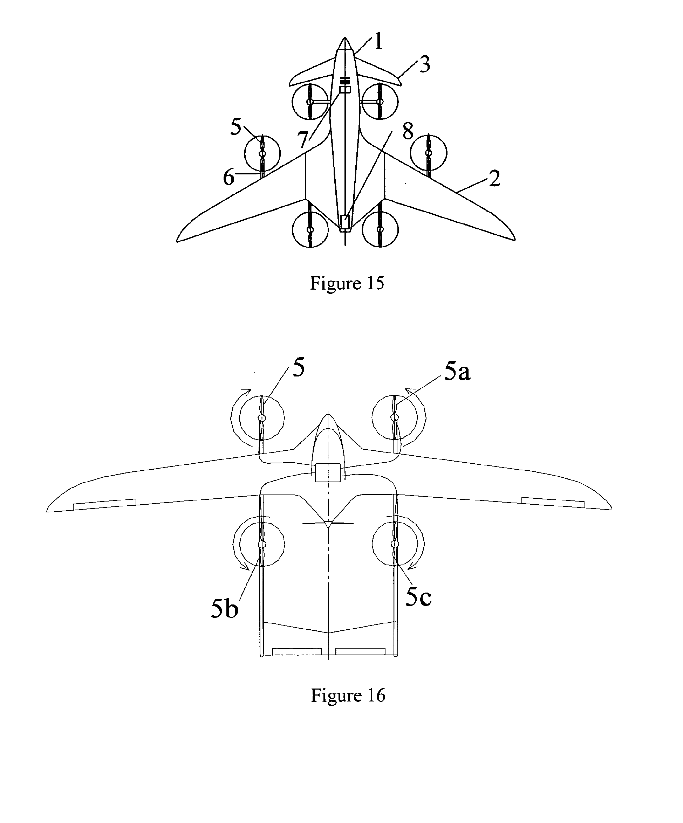

The take-off and landing process can use the helicopter mode, fixed-wing aircraft mode or mixed mode:
1. When the aircraft takes off and lands in the helicopter mode, the fixed-wing dynamic system is switched off, four (or more) sets of the electric multi-rotor dynamic system are switched on, the electric multi-rotor control system controls the vertical take-off and landing of the aircraft by means of increasing and decreasing the rotating speed and/or the pitch of all the rotors. Vertical take-off and landing consume high power, but the time for using the electric multi-rotor dynamic system is short, the consumed power during the take-off and landing account for a small proportion of the power consumed during the whole flight. Thus it is the main take-off and landing mode of the aircraft and the aircraft takes off and lands like an ordinary helicopter. As shown in fig. 16, all four rotors increase and decrease the rotating speed during take-off and landing.
2. When the aircraft takes off and lands in the fixed-wing aircraft mode, four (or more) sets of the electric multi-rotor dynamic system are switched off, only the fixed-wing dynamic system is switched on, and the aircraft can take off and land on the runway just like an ordinary fixed-wing aircraft.
3. When the aircraft takes off and lands in the mixed mode, both the fixed-wing dynamic system and the electric multi-rotor dynamic system are switched on. The pros and cons lie between the helicopter mode and the fixed-wing aircraft mode.

During the take-off process in the mixed mode, both dynamic systems can work together so that the lift generated is much larger than the lift generated by a single dynamic system. Thus the mixed mode has wider application; especially under the circumstance that the aircraft load is heavy. For example, the fighter is fully loaded with fuel and weapons when it takes off, traditional fighter takes off with the power provided only by the fixed-wing dynamic system. But the power is limited and the take-off speed is low. However, in this invention, the electric multi-rotor dynamic system provides power at the same time so that the power increases a lot and the take-off speed is very high.

During the take-off process in the mixed mode, the circumstance that the runway is not long enough is also applicable. For example, a normal runway is 500 meters long, but under some situation confined by the geographic environment, such as the rugged area like the mountain area or the deck of the aircraft carrier, the runway cannot reach 500 meters. For example, if the runway is only 250 meters long, the mixed mode can be used to taxi and take off on the runway to achieve taking off in a short distance finally.

The flying process can also use the helicopter mode, fixed-wing aircraft mode and mixed mode:
1. When the aircraft flies in the helicopter mode, the fixed-wing dynamic system is switched off, four (or more) sets of the electric multi-rotor dynamic system are switched on, the aircraft can complete all the functions of a helicopter such as to complete aerial photographing and fixed location detection, etc. The aircraft flies like an ordinary helicopter in such mode. Therein, the electric multi-rotor control system controls the attitude of the aircraft by means of decreasing the rotating speed and /or the pitch of the rotors which are in front of the center of gravity of the aircraft in the direction of flying and at the same time also increasing the rotating speed and /or the pitch of the rotors which are behind the center of gravity of the aircraft in the direction of flying. As shown in fig. 16, when the aircraft flies towards the left: rotors 5a and 5c increase the rotating speed, rotors 5 and 5b decrease the rotating speed; when the aircraft flies towards the right: rotors 5 and 5b increase the rotating speed, rotors 5a and 5c decrease the rotating speed.
   The electric multi-rotor control system controls the flying direction of the aircraft by means of increasing the rotating speed and /or the pitch of the rotors which rotates in the reverse direction of the turning direction of the aircraft and decreasing the rotating speed and /or the pitch of the rotors which rotates in the same direction as the turning direction of the aircraft. As shown in fig. 16, when the aircraft turns to the left: rotors 5 and 5c increase the rotating speed, rotors 5a and 5b decrease the rotating speed; when the aircraft turns to the right: rotors 5a and 5b increase the rotating speed, rotors 5 and 5c decrease the rotating speed; when the aircraft flies forward: rotors 5b and 5c increase the rotating speed, rotors 5 and 5a decrease the rotating speed; when the aircraft flies backward: rotors 5 and 5a increase the rotating speed, rotors 5b and 5c decrease the rotating speed.
   Specifically, half of the rotors rotate clockwise and another half of the rotors rotate counterclockwise. In the helicopter mode, the electric gyroscope can be used to control the rotating speed of four rotors to form a stable rotor helicopter flying platform. By means of changing the rotating speed to change the lift and torque of four rotors, the rotor helicopter can be controlled to fly or turn to all directions. Therein, the electric gyroscope is a common device in the field; the technical persons can choose its type on the basis of specific needs.
2. When the aircraft flies in the fixed-wing aircraft mode, four (or more) sets of rotors are switched off and only the fixed-wing dynamic system is switched on, and the aircraft can complete all the functions of the fixed-wing aircraft. The advantage is its low power consumption and long flying distance and time. This mode is the main flying mode of this aircraft and the aircraft flies like an ordinary fixed-wing aircraft.
3. When the aircraft flies in the mixed mode, both the fixed-wing dynamic system and the electric multi-rotor dynamic system are switched on. The pros and cons lie between the helicopter mode and the fixed-wing aircraft mode.

In the mixed mode, in order to ensure that the rotors are kept parallel to the flying direction of the aircraft after they stop rotating so as to decrease the flying drag to the greatest extent possible and increase the flying efficiency, a rotor blade location control unit 721 can be added into the electric multi-rotor control system to control the rotor blade location of the electric multi-rotor dynamic system to be always parallel to the flying direction of the aircraft when the electric multi-rotor dynamic system is switched off and the fixed-wing dynamic system is switched on.

In the mixed mode, one situation where two above-mentioned dynamic systems work synergistically is that: in the process of shifting from the helicopter flying mode to the fixed-wing flying mode, the propellers start to generate power when the aircraft is hovering and the aircraft starts to have horizontal movement; then as the airspeed increases, the fixed-wing generates lift gradually; at the same time the multi-rotor decreases the rotating speed gradually in order to decrease the rotor lift so that the overall lift is maintained unchanged until the airspeed is larger than the stalling speed of the fixed-wing; thus the shift from the multi-rotor helicopter flying mode to the fixed-wing flying mode is completed.

In the mixed mode, another situation where two above-mentioned dynamic systems work synergistically is that: in the process of shifting from the fixed-wing flying mode to the helicopter flying mode, as the thrust of the horizontal propellers decreases and the airspeed gets close to the stalling speed of the fixed-wing, the multi-rotor starts to generate lift; as the airspeed decreases more, the multi-rotor increases the rotating speed in order to increase the lift to compensate the loss of the lift of the fixed-wing part so that the overall lift is maintained unchanged; when the propellers stops rotating at last and the airspeed decreases to zero, the fixed-wing flying mode is fully shifted to the helicopter flying mode. Another situation of working synergistically is that: in the whole process of taking off, flying and landing, the fixed-wing control system and the electric multi-rotor control system operate synergistically under the control of the main controller.

The specific production and realization of the above-mentioned main controller, each control system and each control unit can all be realized be means of the existing electric control method and software method, so no further detail will be described here.

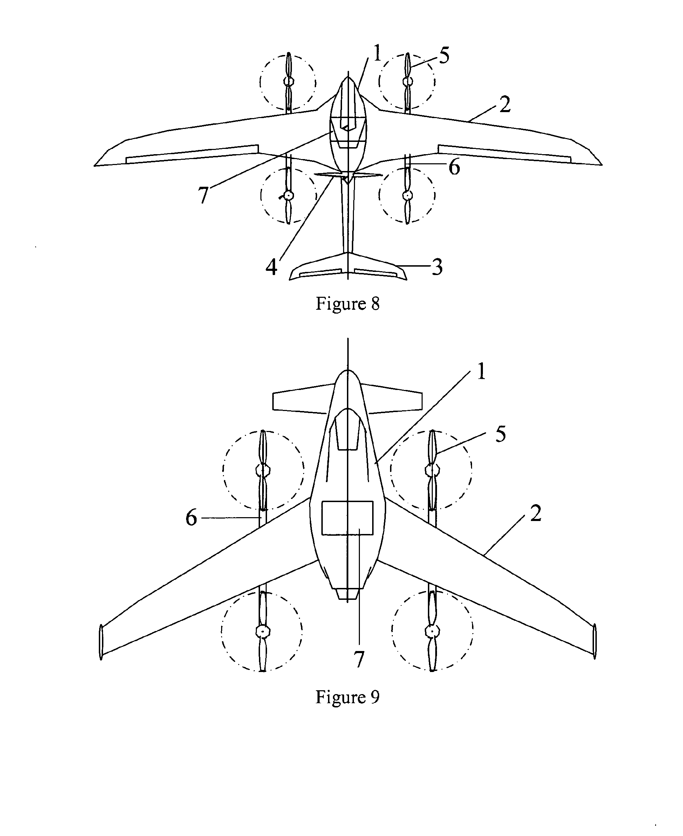

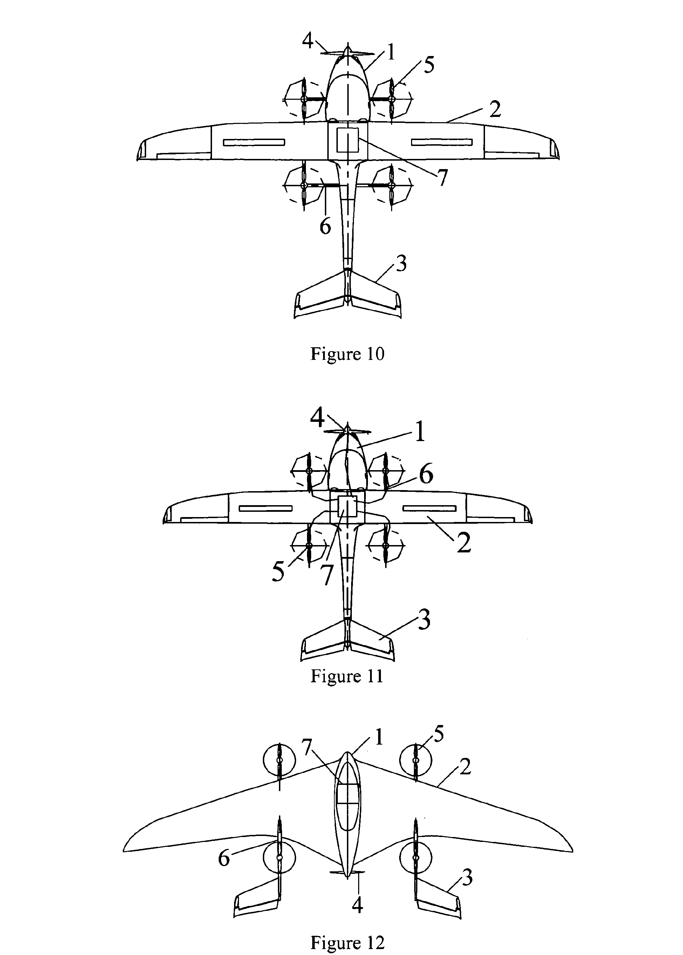

As shown in fig. 7-13, the tail structure of the fixed-wing aircraft parts in this invention can be of other type, such as flying wing-like without a tail, 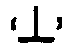 shape, 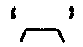 shape, 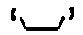 shape, 'T' shape, 'V' shape, '∧' shape, etc.

### The second embodiment

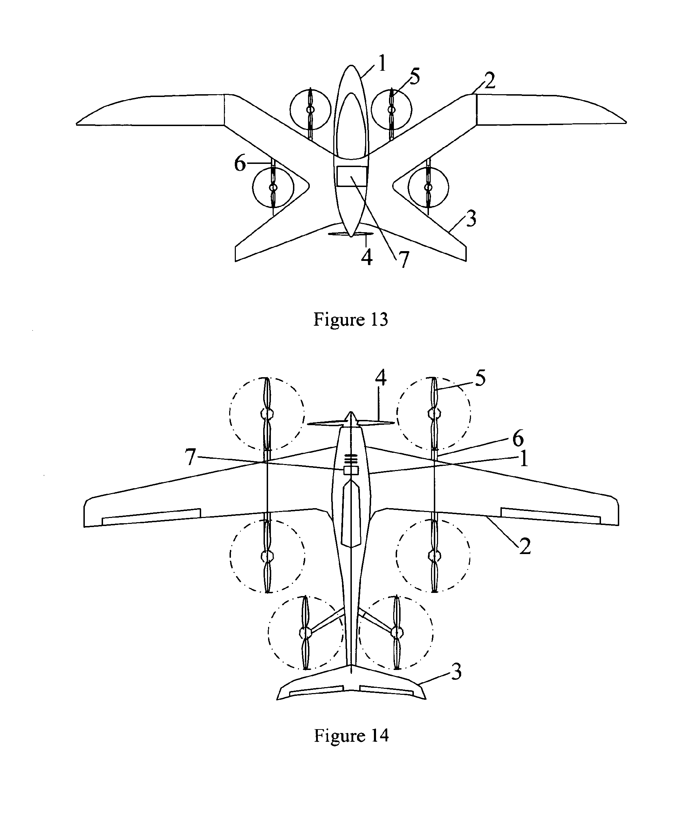

As shown in fig. 14 and 15, the difference between this embodiment and the first embodiment lies mainly in: there are six sets of electric multi-rotor dynamic system in this embodiment, therein four sets are installed on the main wing, and the other two sets are installed at the location near the tail on the airframe. As shown in fig. 15, a jet apparatus 8 is installed at the aircraft tail, and the exhaust air can be used as power to propel the aircraft to fly forward. The rest parts are basically the same as in the first embodiment.

It is to be understood that the foregoing description of two preferred embodiments is intended to be purely illustrative of the principles of the invention, rather than exhaustive thereof, and that changes and variations will be apparent to those skilled in the art, and that the present invention is not intended to be limited other than expressly set forth in the following claims.

## Claims

1. A fixed-wing and electric multi-rotor composite aircraft comprises a set of fixed-wing aircraft parts, which comprises airframe, wing, fixed-wing dynamic system, and fixed-wing control system, the fixed-wing control system comprises fixed-wing dynamic control system and fixed-wing control surface control system, which is **characterized in that** the aircraft also comprises a set of electric multi-rotor dynamic systems and a main controller, the fixed-wing dynamic system and electric multi-rotor dynamic system are mutually independent structurally, the main controller comprises the fixed-wing control system and a electric multi-rotor control system which is used for controlling the operation of the electric multi-rotor dynamic system, the main controller is also used for controlling the fixed-wing control system and the electric multi-rotor control system to operate independently or synergistically, the rotor rotating plane of the electric multi-rotor dynamic system is parallel to the central shaft of the airframe.

2. The fixed-wing and electric multi-rotor composite aircraft, as cited in claim 1, which is **characterized in that**, the electric multi-rotor control system is used for controlling the take-off and landing, the attitude and the flying direction of the aircraft.

3. The fixed-wing and electric multi-rotor composite aircraft, as cited in claim 2, which is **characterized in that**, the electric multi-rotor control system controls the take-off and landing of the aircraft by means of increasing and decreasing the rotating speed and/or the pitch of all the rotors.

4. The fixed-wing and electric multi-rotor composite aircraft, as cited in claim 2, which is **characterized in that**, the electric multi-rotor control system controls the attitude of the aircraft by means of decreasing the rotating speed and /or the pitch of the rotors which are in front of the center of gravity of the aircraft in the direction of flying and at the same time increasing the rotating speed and /or the pitch of the rotors which are behind the center of gravity of the aircraft in the direction of flying.

5. The fixed-wing and electric multi-rotor composite aircraft, as cited in claim 2, which is **characterized in that**, the electric multi-rotor control system controls the flying direction of the aircraft by means of increasing the rotating speed and /or the pitch of the rotors which rotates in the reverse direction of the turning direction of the aircraft and decreasing the rotating speed and /or the pitch of the rotors which rotates in the same direction as the turning direction of the aircraft.

6. The fixed-wing and electric multi-rotor composite aircraft, as cited in claim 1, which is **characterized in that**, the aircraft comprises four sets of electric multi-rotor dynamic systems, each set comprises a power unit and the rotors connected to the power unit, the rotors are respectively arranged on both sides of the airframe and in front of and behind the wing, and they are placed symmetrically relative to the center of gravity of the aircraft; or the electric multi-rotor dynamic systems are respectively arranged on both sides of the airframe and in front of and behind the wing as a whole, and they are placed symmetrically relative to the center of gravity of the aircraft.

7. The fixed-wing and electric multi-rotor composite aircraft, as cited in claim 6, which is **characterized in that**, each set of the electric multi-rotor dynamic system or the rotor connects to the airframe or the wing through a supporting arm.

8. The fixed-wing and electric multi-rotor composite aircraft, as cited in claim 6, which is **characterized in that**, some of the sets of the electric multi-rotor dynamic systems or some sets of the rotors share a supporting arm to connect to the airframe or the wing.

9. The fixed-wing and electric multi-rotor composite aircraft, as cited in claim 6, which is **characterized in that**, the power unit is a motor.

10. The fixed-wing and electric multi-rotor composite aircraft, as cited in claim 1, which is **characterized in that**, the electric multi-rotor control system comprises a rotor blade location control unit, which is used for controlling the rotor blade location of the electric multi-rotor dynamic system to be always parallel to the flying direction of the aircraft when the electric multi-rotor dynamic system is switched off and the fixed-wing dynamic system is switched on.

11. The fixed-wing and electric multi-rotor composite aircraft, as cited in claim 1, which is **characterized in that**, one of the synergistic working modes is that: in the process of shifting from the multi-rotor helicopter flying mode to the fixed-wing flying mode, the propellers start to generate power when the aircraft is hovering and the aircraft starts to have horizontal movement, then as the airspeed increases, the fixed-wing generates lift gradually, at the same time the multi-rotor decreases the rotating speed gradually in order to decrease the rotor lift so that the overall lift is maintained unchanged until the airspeed is larger than the stalling speed of the fixed-wing, thus the shift from the multi-rotor helicopter flying mode to the fixed-wing flying mode is completed.

12. The fixed-wing and electric multi-rotor composite aircraft, as cited in claim 1, which is **characterized in that**, another one of the synergistic working modes is that: in the process of shifting from the fixed-wing flying mode to the multi-rotor helicopter flying mode, as the thrust of the horizontal propellers decreases and the airspeed gets close to the stalling speed of the fixed-wing, the multi-rotor starts to generate lift, and as the airspeed decreases further, the multi-rotor increases the rotating speed in order to increase the lift to compensate the decrease of the lift of the fixed-wing part so that the overall lift is maintained unchanged, when the propellers stops rotating at last and the airspeed decreases to zero, the fixed-wing flying mode is fully shifted to the multi-rotor helicopter flying mode.

13. The fixed-wing and electric multi-rotor composite aircraft, as cited in claim 1, which is **characterized in that**, another one of the synergistic working modes is that: in the process of taking off, flying and landing, the fixed-wing control system and the electric multi-rotor control system operate synergistically under the control of the main controller.

14. The fixed-wing and electric multi-rotor composite aircraft, as cited in claim 1, which is **characterized in that**, the propeller of the fixed-wing dynamic system is located in the front of the airframe or in the rear of the airframe, or the propellers are located on both sides of the airframe or in the front and the rear of the airframe simultaneously.

15. The fixed-wing and electric multi-rotor composite aircraft, as cited in claim 1, which is **characterized in that**, the tail structure of the aircraft is flying-wing-like without a tail, 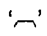 shape, 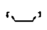 shape, '┴' shape, 'T' shape, 'V' shape, or '∧' shape.

16. The fixed-wing and electric multi-rotor composite aircraft, as cited in claim 1, which is **characterized in that**, the fixed-wing dynamic system is electric dynamic system or fuel oil dynamic system.

17. The fixed-wing and electric multi-rotor composite aircraft, as cited in any of the claims 1-16, which is **characterized in that**, the number of the fixed-wing dynamic systems is one set or several sets.
